# EUROPEAN PATENT SPECIFICATION

(11) **EP 4 375 197 B1**
(45) Date of publication and mention of the grant of the patent: **20.05.2026**
(21) Application number: 22383120.7
(22) Date of filing: 22.11.2022
(51) Int. Cl.: B64D 41/00, F16B 5/02, F16B 5/06, F16B 21/18, F16B 41/00

(54) **AIRCRAFT REMOVABLE EQUIPMENT FITTING DEVICE**
VORRICHTUNG ZUR LÖSBAREN AUSRÜSTUNG EINES FLUGZEUGS
DISPOSITIF DE FIXATION D'ÉQUIPEMENT AMOVIBLE D'AÉRONEF

(43) Date of publication of application: 29.05.2024
(73) Proprietor: Airbus Operations S.L.U., 28906 Getafe, Madrid (ES)
(72) Inventor: ENEBRAL TRIGO, Ignacio Santiago, Getafe (ES)
(74) Representative: Elzaburu S.L.P.

(56) References cited:
- US-A1- 2010 243 809
- US-A1- 2018 002 029
- US-A1- 2018 022 468

## Description

### Field of the invention

The invention relates to a fitting device for the installation and/or removal of equipment that shall be attached to the aircraft structure. The fitting device of the invention is devoted to the installation of aircraft equipment without the need to gain access from inside the aircraft, thus avoiding space constraints within the aircraft structure.

### Background of the invention

Aircraft have a structure comprising frames, stringers, beams, etc., to which aircraft equipment is fitted. Some of this equipment is removably fitted.

There are several means for accomplishing removable equipment installation on aircraft structure. Fittings are used to attach in a reversible way a mechanical component such as an aircraft equipment.

Lug fittings, bolted joints and hard-point fittings are widely known.

Equipment installed with lug fittings or bolted joint requires access to the aircraft structure and enough space for performing installation tasks. These fittings might feature some capability to absorb tolerances by lugs pinned with or without a spherical ball, floating or not floating. They may also have slotted holes for absorbing certain tolerances.

Fittings located at hard-points of the aircraft are also known and allow equipment installation from the outside of the aircraft, but they permit only limited adjustment.

It is known document US2018/022468 disclosing a suspension system for an aircraft auxiliary power unit located in a fuselage structure. The system includes struts, auxiliary power unit attachment brackets for connecting the strut to the auxiliary power unit, vibration isolators for joining the struts and the auxiliary power unit attachment bracket, a cone-bolt attached to the auxiliary power unit attachment brackets, an inner bolt partially located within the hollow of the cone-bolt.

It is also known document US2018002029A1 that discloses a support device for an actuator. The support device includes a support unit adapted to be mounted to a stationary structure, an attachment unit adapted to be attached to an actuator casing and a single pivot shaft, and the attachment unit is pivotably connected to the support unit via the single pivot shaft.

It is also known document US2010243809A1 disclosing a device used to plug an opening in a structure having a front side and a back side. The device includes a removable plug body for plugging the opening, and a retainer that is expandable into engagement with the back side of the structure to retain the plug in the opening.

### Summary of the invention

The invention relates to an aircraft removable equipment fitting device. As previously stated, aircraft comprise a structure (frames, stringers, beams, ...) to which removable equipment is fitted or attached.

The fitting device object of the invention is according to claim 1.

According to the above, a coupling is a fitting element into which the end of another coupling can be fitted. The fastener mechanically holds together the removable equipment and the aircraft structure to attach them securely or firmly in place in a non-permanent joint. Therefore, the joint can be removed or dismantled.

The claimed invention solves the installation of the equipment from outside of the aircraft by using two couplings, one of them joined to the removable equipment and the other to the aircraft structure, and a fastener element tightening the removable equipment and the second coupling to the first coupling and hence to the aircraft structure, for instance, by passing through a portion of the removable equipment. Therefore, the fastener can be operated from the removable equipment side avoiding the need to operate the fitting from the inner structure of the aircraft.

According to the above, the first coupling is joined to the structure and the second coupling is joined, for instance, fastened by bolts or rivets, to the aircraft equipment so that the equipment together with the second coupling are placed into the inner structure of the aircraft and connected to the first coupling. Then, the fastener holds in position the aircraft equipment, the first coupling and the second coupling being actuated from the aircraft equipment side.

The claimed invention would be appropriate for aircraft equipment installed on areas with reduced accessibility from aircraft inside.

The invention combines in a single fitting the benefits of different means of attachment, avoiding their individual inconveniences.

It is also an object of the invention an aircraft removable equipment assembly according to claim 9.

It is also a further object of the invention an aircraft comprising an aircraft removable equipment assembly according to the above.

### Description of the figures

To complete the description and to provide for a better understanding of the invention, a set of drawings is provided. Said drawings form an integral part of the description and illustrate preferred embodiments of the invention. The drawings comprise the following figures.
Figure 1 shows a schematic cross-sectional lateral view of an embodiment of the invention.
Figure 2 shows a schematic lateral of the embodiment of the fastener of figure 1.
Figure 3 shows a schematic cross-sectional lateral view of a part of an aircraft and an embodiment of the first coupling.
Figure 4 shows a schematic perspective view of a part of an aircraft and an embodiment of the joint of the first coupling.
Figure 5 shows a schematic cross-sectional lateral view of an air inlet of an Auxiliary Power Unit (APU) according to an embodiment of the invention.
Figure 6 shows a schematic plan view of the air inlet of an Auxiliary Power Unit (APU) according to the embodiment of figure 5.
Figure 7 shows a schematic plan view of the air inlet of an Auxiliary Power Unit (APU) and an embodiment of a rear fitting device.
Figure 8 shows a schematic plan view of the air inlet of an Auxiliary Power Unit (APU) and an embodiment of the rear fitting device of figure 7.

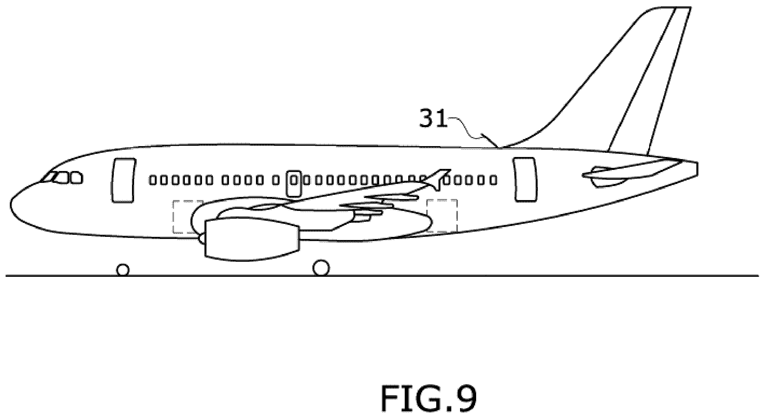

Figure 9 shows a lateral view of an aircraft comprising an air inlet of an Auxiliary Power Unit (APU).

### Detailed description of the invention

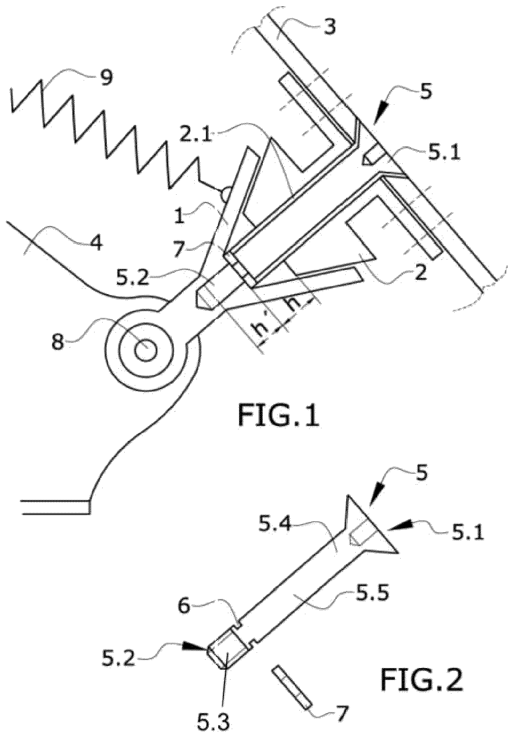

Figure 1 shows an embodiment of the fitting device object of the invention that comprises:
- A first coupling (1) joined to the aircraft structure (4).
- A second coupling (2) joined to the aircraft equipment (3) and coupled to the first coupling (1). In the shown embodiment, the second coupling (2) is fastened to the aircraft equipment (3), for instance, by means of bolts or rivets.
- A fastener (5) tightening the removable equipment (3) and the second coupling (2) to the first coupling (1) so that the removable equipment (3) is fastened to the aircraft structure (4).

In the shown embodiment, the first coupling (1) has a longitudinal axis, and the second coupling (2) has a longitudinal axis. More specifically, the shown fastener (5) passes through a portion of the removable equipment (3) adjacent to the second coupling (2) and is located along the longitudinal axis of the first coupling (1) and of the second coupling (2).

To pass through is to be understood as to go across or traverse the portion of the removable equipment (3) adjacent to the second coupling (2). This portion may be, for instance, a wall, a partition, or a lug of the removable equipment that is traversed or crossed by the fastener (5).

In figure 1 a portion of the aircraft equipment (3) has an opening for the fastener (5) so that the fastener (5) can be operated from the aircraft equipment (3) side instead of from the aircraft structure (4) side.

In the shown embodiment, the fastener (5) comprises a head (5.1) and a tip (5.2). The tip (5.2) engages on the first coupling (1) and the head (5.1) rests or lies on the removable equipment (3), specifically, on a portion of the removable equipment (3) adjacent to the first coupling (1). Thus, the fastener (5) can be operated from the head (5.1) through the previously mentioned opening of the aircraft equipment (3).

In the shown embodiment, the first coupling (1) comprises a female coupling, and the second coupling (2) comprises a male coupling.

Specifically, the first coupling (1) and the second coupling (2) are conical couplings. This particular shape helps self-aligning of the fitting device.

Figure 2 discloses an embodiment of the fastener (5) which is specifically a bolt. The fastener (5) comprises a cylindrical elongated body comprising a first longitudinal threaded part configured to be threaded to the first coupling (1). It also comprises a second longitudinal part (5.4) that in the fastened position is located within the longitudinal length of the second coupling (2), i.e., this second longitudinal part (5.4) is surrounded by the second coupling (2), as shown in figure 1. Finally, it comprises a third longitudinal part (5.5) longitudinally located between the first part and the second part (5.4).

According to the above, the fastener (5) is operated from the head (5.1) and threaded to the first coupling (1) at its first longitudinal threaded part.

The fastener (5) further comprises a circumferential slot (6), i.e., a slot surrounding its cylindrical body, located at its third part (5.5) adjacent to the first longitudinal threaded part.

It also comprises a circumferential retainer element (7) located at the circumferential slot (6). The circumferential retainer element (7) has an outer radius dimension such that the dimension of the circumferential retainer element (7) retains the fastener (5) within the second coupling (2).

In the shown embodiment, the second coupling (2) comprises an internal through hole (2.1) and the circumferential retainer element (7) has an outer radius, the radius at a greater distance from the center, larger than the radius of the internal through hole (2.1) of the second coupling (2). Therefore, the dimensions of the circumferential retainer element (7) retain the fastener (5) within the second coupling (2).

As can be seen in figure 1, the longitudinal length of the longitudinal threaded first part is smaller than the longitudinal length of the third part (5.5). It allows the removal of the fitting device while the fastener (5) is retained in the second coupling (2).

According to the above, fasteners (5) are captive in the second coupling (2), i.e., on the male coupling, to ensure they cannot fall off from the second coupling (2). It avoids any fastener (5) being loosen and, for instance, being ingested by an air duct.

Alternatively, fasteners (5) may be screwed to coils, specifically replaceable and self-locking female threads, inserted on the first coupling (1) to ensure fasteners (5) will not get untighten.

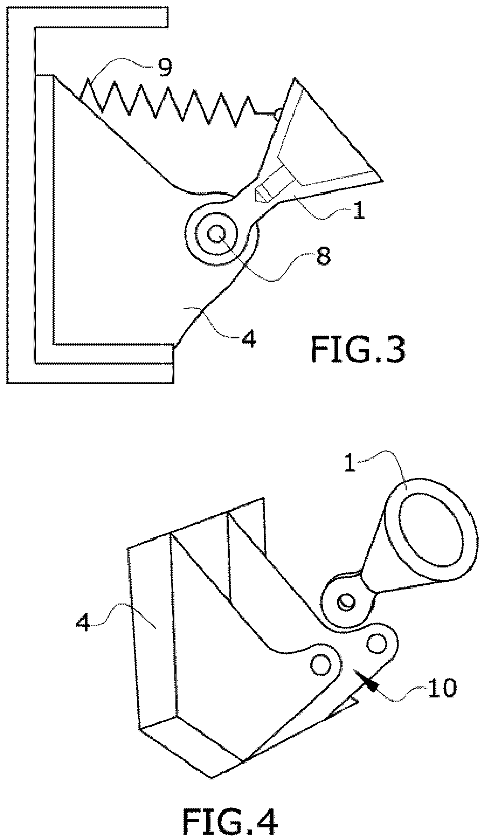

Figure 4 shows a schematic perspective view of an embodiment of the joint of the first coupling (1) to the aircraft structure (4). The embodiment's configuration provides a simply support in which translational degrees of freedom are restricted, while rotational ones are not restricted. According to the shown embodiment, the first coupling (1) is joined to the aircraft structure (4) by a pin and lug fitting (10) featuring a spherical bearing, as can be seen, for instance, in figures 1, 3 and 4.

In an embodiment, the fitting between the first coupling (1) and the aircraft structure (4) comprises a spherical bearing (8). Thus, tolerance of relative position between the first coupling (1) and the second coupling (2) are absorbed at the aircraft structure (4) side, i.e., at the first coupling (1), on angles, by the spherical bearings (8) on the joint of the first coupling (1) to the aircraft structure (4).

The above configuration ensures that no moment loading will be transferred, neither bending or torsional, from the first coupling (1) to the fitting fastened to the aircraft structure (4).

Moreover, the above embodiment can either transfer load in the pin direction in a fixed configuration wherein the lug of the first coupling (1) is fixed along the clevis pin direction, or not transfer load in a floating configuration. The pin and lug fitting (10) avoids translations in X and Z-direction and rotations around X and Z.

Particularly, combining two fitting embodiments in a single side of the removable equipment (3), one with its first coupling (1) lug fixed in the pin direction and the other with its first coupling (1) lug floating in the pin direction, does not over-constrain or pre-stress the removable equipment (3) in any direction. In that case, one of the fittings is a bearing so that translations in Y-direction are also avoided. Therefore, only the rotation around the Y-direction is left that allows inserting the removable equipment (3) in its place. Afterwards, rotation in the Y-direction is constrained.

Figure 3 discloses that the fitting device also comprises an elastic element (9) joined to the first coupling (1) and to the aircraft structure (4) for holding the first coupling (1).

Thus, to hold the first coupling (1) in an approximate nominal installation position, elastic elements (9), specifically springs, are positioned between the first coupling (1) and the aircraft structure (4). More specifically, an intermediate plate is added which is lastly fastened to the aircraft structure (4).

These springs do not fulfil a structural task, i.e., they do not take any load once equipment installation is completed. More specifically, the turning degree of freedom of the equipment around their coupling axes, is blocked by additional restrains on other parts of the aircraft equipment.

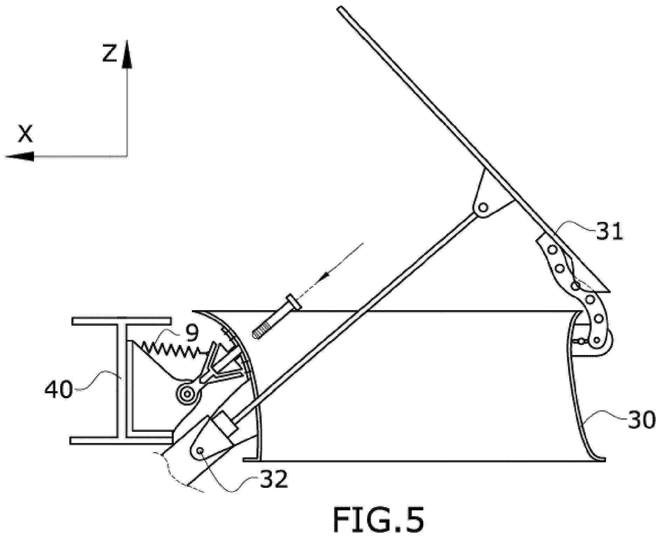

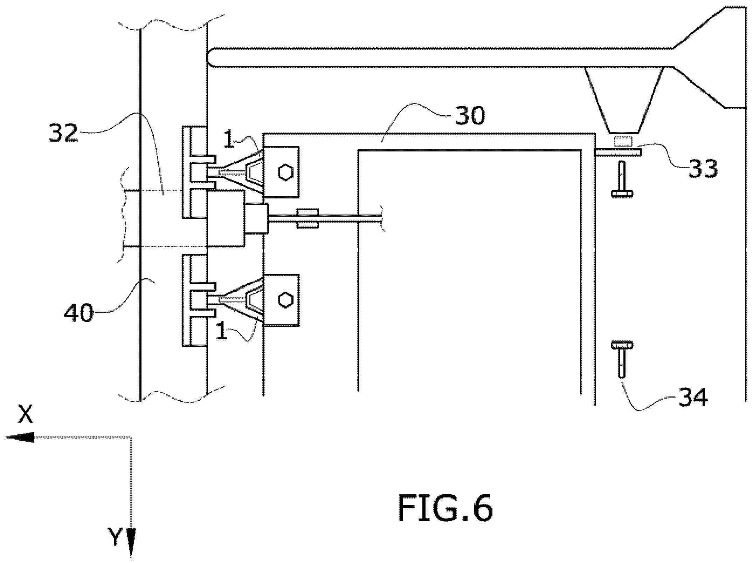

The embodiment shown in figures 5 and 6 show an air inlet of an Auxiliary Power Unit (APU). More specifically, it shows a funnel (30) of the air inlet which is the aircraft equipment (3) to be attached to the aircraft structure (4).

The embodiment shows two first couplings (1), two second couplings (2) and two fasteners (5). Therefore, two fitting points are depicted. The two second couplings (2) are joined to the removable equipment (3), i.e., the funnel (30), and the first couplings (1) are joined to the aircraft structure (4).

In the shown embodiment, one of the lugs of the spherical bearing (8) of the pin and lug fitting (10) is floating in the pin direction. Thus, tolerance of relative position between the first coupling (1) and the second coupling (2) are absorbed at the aircraft structure (4) side fittings, i.e., at the first coupling (1) on an Y-direction because one of the lug fittings is floating in the pin direction.

Figures 5 and 6 disclose an aircraft removable equipment (3) assembly comprising:
- the removable equipment (3), which is the air inlet comprising the funnel (30) which in turn comprises a door (31),
- two first couplings (1) joined to the aircraft structure (4),
- two second couplings (2) joined, for instance, rivetted or bolted, to the removable equipment (3) and coupled to the first coupling (1), and
- two fasteners (5) configured to tighten the removable equipment (3) and the second couplings (2) to the first couplings (1) so that the removable equipment (3) is fastened to the aircraft structure (4).

Specifically, the fasteners (5) pass through two openings in a portion of the funnel (30) wall and their heads (5.1) are allocated into said openings.

More particularly, figures 5 and 6 show a portion of a frame (40) of an Auxiliary Power Unit (APU) section and the air inlet configuration that has to be joined to the mentioned frame (40). The funnel (30) of the air inlet can be installed and removed from the outside the aircraft.

Thus, the invention allows having an air intake part that can be removed as a whole from the outside part of the aircraft, i.e., without accessing the inside of the aircraft by opening an air intake door (31) so that it can be detached from the inside of the funnel (30). In the shown embodiment, the door (31) is pivotally hinged to the funnel (30).

In addition, the funnel (30) comprises additional rear fittings (33, 34), specifically two fittings (33, 34), located on an opposite side of the funnel (30) to the first and second couplings (1, 2).

In the shown embodiment, one of the two rear fittings (33) only transmits load in Z direction. It allows to prevent rotation around Y-direction for the front fittings, i.e., couplings (1, 2).

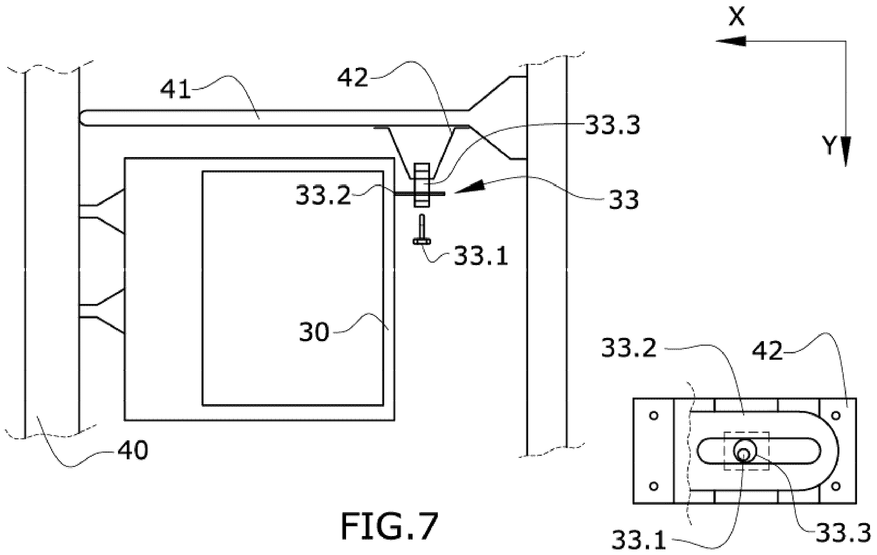

Figure 7 discloses an embodiment of said rear fitting (33). The rear fitting (33) attaches the funnel (30) to a beam (41), specifically through an omega profile (42).

In the embodiment, the rear fitting (33) comprises a bolt (33.1), a lug (33.2) joined to the funnel (30) and a bushing (33.3) holding the bolt (33.1). In an embodiment, the lug (33.2) is an elongated lug (33.2) extending in the X- direction with an elongated opening through it so that the bolt (33.1) and bushing fit through the opening in the Y-direction. The bolt (33.1) and bushing are free to translate in the opening of the lug along the Y-direction. Therefore, as previously stated, said rear fitting (33) transmits loads in the Z-direction only.

Moreover, the bushing (33.3) comprises an eccentric hole for the mounting of the bolt (33.1) through it, so as to adjust the height of the bolt (33.1) and bushing (33.3) assembly along the Z-direction in the opening of the elongated lug (33.2).

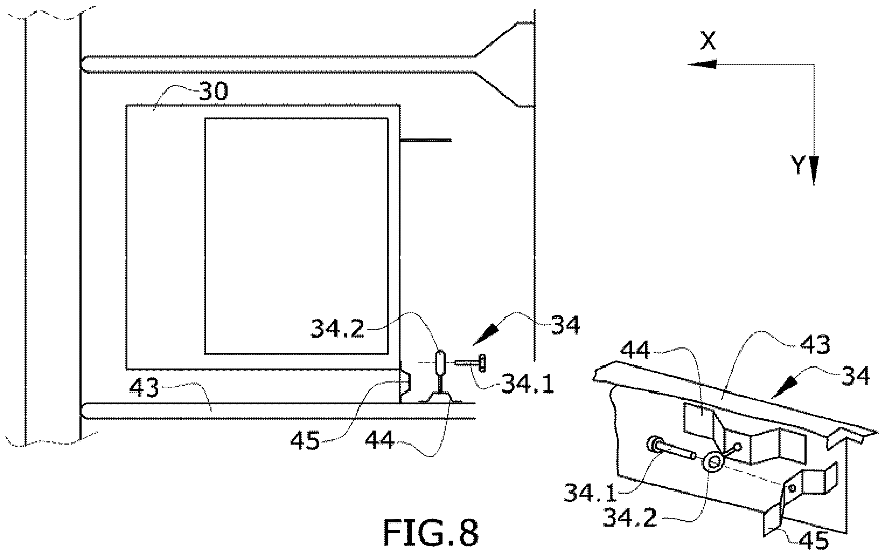

The other rear fitting (34), which is depicted in figure 8, transmits loads in Y and Z-directions. The rear fitting (34) attaches the funnel (30) to a beam (43), in the shown embodiment specifically through a first omega profile (44). In the embodiment of figure 8, the rear fitting (34) comprises a bolt (34.1), a lug (34.2) joined to the mentioned first omega profile (44) and an additional omega-profile (45) receiving the bolt (34.1) and joined to the funnel (30). Specifically, in the shown embodiment, the lug (34.2) is located and adjustable in the Y- direction. The lug (34.2) comprise an opening adapted to receive the bolt (34.1) through it in the X-direction. The bolt (34.1) is adapted to translate freely along the X-direction through the opening of the lug (34.2), while it is restrained along the Y and Z-directions. Therefore, as previously stated, said rear fitting (34) transmits loads in the Y and Z-directions.

The aircraft structure (4) comprises a panel, not disclosed, in the proximity of the rear fittings (33, 34) for gaining access to them.

In addition, the funnel (30) comprises an actuator (32) for its aperture. The actuator (32) is attached to the funnel (30) and to the door (31), so that the actuator (32) is removed with the funnel (30) when the funnel (30) is removed. The actuator (32) is not attached to the aircraft structure (4) and when removing the funnel (30) only the fittings, couplings (1, 2) and rear fittings (33, 34) have to be removed.

## Claims

1. Aircraft removable equipment (3) fitting device for an aircraft comprising a structure (4) to which a removable equipment (3) is configured to be attached, the aircraft removable equipment (3) fitting device comprises:
- a first coupling (1) configured to be joined to the aircraft structure (4),
- a second coupling (2) configured to be joined to the removable equipment (3) and to be coupled to the first coupling (1),
- a fastener (5) configured to tighten both the removable equipment (3) and the second coupling (2) to the first coupling (1) so that the removable equipment (3) is fastened to the aircraft structure (4),
- a fitting configured to join the first coupling (1) to the aircraft structure (4), the fitting being configured to restrict translational degrees of freedom and allow rotational degrees of freedom, and
**characterized in that** the aircraft removable equipment fitting device comprises
- a spring joined to the first coupling (1) and configured to be joined to the aircraft structure (4), the spring being configured to hold the first coupling (1) in an approximate nominal installation position.

2. Aircraft removable equipment fitting device, according to claim 1, wherein the first coupling (1) and the second coupling (2) have a longitudinal axis, and the fastener (5) is configured to pass through a portion of the removable equipment (3) adjacent to the second coupling (2) and is located along the longitudinal axis of the first coupling (1) and of the second coupling (2).

3. Aircraft removable equipment fitting device, according to claim 2, wherein the fastener (5) comprises a head (5.1) and a tip (5.2) and, in a fastened position, the tip (5.2) is configured to engage with the first coupling (1) and the head (5.1) is configured to rest on the removable equipment (3).

4. Aircraft removable equipment fitting device, according to claim 2 or 3, wherein the fastener (5) comprises a cylindrical elongated body comprising a first longitudinal threaded part (5.3) configured to be threaded to the first coupling (1), a second longitudinal part (5.4) that in the fastened position is located within the second coupling (2) along its longitudinal length and a third longitudinal part (5.5) longitudinally located between the first part (5.1) and the second part (5.2).

5. Aircraft removable equipment fitting device, according to claim 4, wherein the fastener (5) comprises a circumferential slot (6) which is located at its third part (5.5) and adjacent to the first part (5.3) and a circumferential retainer element (7) configured to be located at the circumferential slot (6), the circumferential retainer element (7) having an outer radius dimension such that the dimensions of the circumferential retainer element (7) retain the fastener (5) within the second coupling (2).

6. Aircraft removable equipment fitting device, according to claim 5, wherein the longitudinal length of the threaded first part (5.3) is smaller than the longitudinal length of the third part (5.5).

7. Aircraft removable equipment fitting device, according to any preceding claim, wherein the fitting between the first coupling (1) and the aircraft structure is a pin and lug fitting (10) comprising a spherical bearing (8).

8. Aircraft removable equipment fitting device, according to any preceding claim, wherein the fitting device comprises two first couplings (1), two second couplings (2) and two fasteners (5), the two first couplings (1) configured to be joined to the aircraft structure (4) and the two second couplings (2) configured to be joined to the removable equipment (3).

9. Aircraft removable equipment (3) assembly for an aircraft comprising a structure (4) to which a removable equipment (3) is configured to be attached, the aircraft removable equipment (3) assembly comprising:
- a removable equipment (3) and a removable equipment fitting device according to any preceding claim, the removable equipment fitting device comprising:
- the first coupling (1) configured to be joined to the aircraft structure (4),
- the second coupling (2) joined to the removable equipment (3) and configured to be coupled to the first coupling (1), and
- the fastener (5) configured to tighten the removable equipment (3) and the second coupling (2) to the first coupling (1) so that the removable equipment (3) is fastened to the aircraft structure (4).

10. Aircraft removable equipment (3) assembly, according to claim 9, wherein the removable equipment (3) is a funnel (30) of an Auxiliary Power Unit (APU) compartment.

11. Aircraft removable equipment (3) assembly, according to claim 10, wherein the funnel (30) comprises an inlet door (31) and an actuator (32) joined to the funnel (30) and to the inlet door (31).

12. Aircraft, comprising a structure (4) and an aircraft removable equipment (3) assembly attached to the structure (4), the aircraft removable equipment assembly being according to any claim 9 to 11.

13. Aircraft, according to claim 12, when claim 9 comprises a removable equipment fitting device according to claim 7 wherein one of the two lugs of the pin and lug fitting (10) is floating.

## Patentansprüche

1. Montagevorrichtung einer entfernbaren Flugzeugausrüstung (3) für ein Flugzeug, die eine Struktur (4) umfasst, die zum Anbringen einer entfernbaren Ausrüstung (3) daran ausgelegt ist, wobei die Montagevorrichtung einer entfernbaren Flugzeugausrüstung (3) Folgendes umfasst:
- eine erste Kopplung (1), die dazu ausgelegt ist, mit der Flugzeugstruktur (4) verbunden zu sein,
- eine zweite Kopplung (2), die dazu ausgelegt ist, mit der entfernbaren Ausrüstung (3) verbunden zu sein und mit der ersten Kopplung (1) gekoppelt zu sein,
- ein Befestigungselement (5), das dazu ausgelegt ist, sowohl die entfernbare Ausrüstung (3) als auch die zweite Kopplung (2) an der ersten Kopplung (1) festzuziehen, so dass die entfernbare Ausrüstung (3) an der Flugzeugstruktur (4) befestigt ist,
- ein Montageelement, das dazu ausgelegt ist, die erste Kopplung (1) mit der Flugzeugstruktur (4) zu verbinden, wobei das Montageelement dazu ausgelegt ist, translatorische Freiheitsgrade zu beschränken und rotatorische Freiheitsgrade zu ermöglichen, und
**dadurch gekennzeichnet, dass** die Montagevorrichtung einer entfernbaren Flugzeugausrüstung Folgendes umfasst
- eine Feder, die mit der ersten Kopplung (1) verbunden und dazu ausgelegt ist, mit der Flugzeugstruktur (4) verbunden zu sein, wobei die Feder dazu ausgelegt ist, die erste Kopplung (1) in einer ungefähren nominalen Einbauposition zu halten.

2. Montagevorrichtung einer entfernbaren Flugzeugausrüstung nach Anspruch 1, wobei die erste Kopplung (1) und die zweite Kopplung (2) eine Längsachse aufweisen und das Befestigungselement (5) dazu ausgelegt ist, durch einen Abschnitt der entfernbaren Ausrüstung (3) angrenzend an die zweite Kopplung (2) zu verlaufen, und entlang der Längsachse der ersten Kopplung (1) und der zweiten Kopplung (2) angeordnet ist.

3. Montagevorrichtung einer entfernbaren Flugzeugausrüstung nach Anspruch 2, wobei das Befestigungselement (5) einen Kopf (5.1) und eine Spitze (5.2) umfasst und in einer befestigten Position die Spitze (5.2) dazu ausgelegt ist, mit der ersten Kopplung (1) in Eingriff zu kommen, und der Kopf (5.1) dazu ausgelegt ist, auf der entfernbaren Ausrüstung (3) aufzuliegen.

4. Montagevorrichtung einer entfernbaren Flugzeugausrüstung nach Anspruch 2 oder 3, wobei das Befestigungselement (5) einen zylindrischen länglichen Körper umfasst, der einen ersten längsverlaufenden Gewindeteil (5.3), der dazu ausgelegt ist, mit der ersten Kopplung (1) verschraubt zu sein, einen zweiten längsverlaufenden Teil (5.4), der in der befestigten Position innerhalb der zweiten Kopplung (2) entlang ihrer Längslänge angeordnet ist, und einen dritten längsverlaufenden Teil (5.5), der in Längsrichtung zwischen dem ersten Teil (5.1) und dem zweiten Teil (5.2) angeordnet ist, umfasst.

5. Montagevorrichtung einer entfernbaren Flugzeugausrüstung nach Anspruch 4, wobei das Befestigungselement (5) einen umlaufenden Schlitz (6), der an seinem dritten Teil (5.5) und angrenzend an den ersten Teil (5.3) angeordnet ist, und ein umlaufendes Halteelement (7), das dazu ausgelegt ist, an dem umlaufenden Schlitz (6) angeordnet zu sein, umfasst, wobei das umlaufende Halteelement (7) eine derartige Außenradiusabmessung aufweist, dass die Abmessungen des umlaufenden Halteelements (7) das Befestigungselement (5) innerhalb der zweiten Kopplung (2) halten.

6. Montagevorrichtung einer entfernbaren Flugzeugausrüstung nach Anspruch 5, wobei die Längslänge des ersten Gewindeteils (5.3) kleiner als die Längslänge des dritten Teils (5.5) ist.

7. Montagevorrichtung einer entfernbaren Flugzeugausrüstung nach einem der vorhergehenden Ansprüche, wobei das Montageelement zwischen der ersten Kopplung (1) und der Flugzeugstruktur ein Stift- und Ösenmontageelement (10) ist, das ein Pendellager (8) umfasst.

8. Montagevorrichtung einer entfernbaren Flugzeugausrüstung nach einem der vorhergehenden Ansprüche, wobei die Montagevorrichtung zwei erste Kopplungen (1), zwei zweite Kopplungen (2) und zwei Befestigungselemente (5) umfasst, wobei die zwei ersten Kopplungen (1) dazu ausgelegt sind, mit der Flugzeugstruktur (4) verbunden zu sein, und die zwei zweiten Kopplungen (2) dazu ausgelegt sind, mit der entfernbaren Ausrüstung (3) verbunden zu sein.

9. Baugruppe einer entfernbaren Flugzeugausrüstung (3) für ein Flugzeug, die eine Struktur (4) umfasst, die zum Anbringen einer entfernbaren Ausrüstung (3) daran ausgelegt ist, wobei die Baugruppe einer entfernbaren Flugzeugausrüstung (3) Folgendes umfasst:
- eine entfernbare Ausrüstung (3) und eine Montagevorrichtung einer entfernbaren Ausrüstung nach einem der vorhergehenden Ansprüche, wobei die Montagevorrichtung einer entfernbaren Ausrüstung Folgendes umfasst:
- die erste Kopplung (1), die dazu ausgelegt ist, mit der Flugzeugstruktur (4) verbunden zu sein,
- die zweite Kopplung (2), die mit der entfernbaren Ausrüstung (3) verbunden und dazu ausgelegt ist, mit der ersten Kopplung (1) gekoppelt zu sein, und
- das Befestigungselement (5), das dazu ausgelegt ist, die entfernbare Ausrüstung (3) und die zweite Kopplung (2) an der ersten Kopplung (1) festzuziehen, so dass die entfernbare Ausrüstung (3) an der Flugzeugstruktur (4) befestigt ist.

10. Baugruppe einer entfernbaren Flugzeugausrüstung (3) nach Anspruch 9, wobei die entfernbare Ausrüstung (3) ein Trichter (30) eines Hilfstriebwerk(APU)-Raums ist.

11. Baugruppe einer entfernbaren Flugzeugausrüstung (3) nach Anspruch 10, wobei der Trichter (30) eine Einlassklappe (31) und einen Aktuator (32) umfasst, der mit dem Trichter (30) und mit der Einlassklappe (31) verbunden ist.

12. Flugzeug, das eine Struktur (4) und eine an der Struktur (4) angebrachte Baugruppe einer entfernbaren Flugzeugausrüstung (3) umfasst, wobei die Baugruppe einer entfernbaren Flugzeugausrüstung gemäß einem der Ansprüche 9 bis 11 ist.

13. Flugzeug nach Anspruch 12, wenn Anspruch 9 eine Montagevorrichtung einer entfernbaren Ausrüstung nach Anspruch 7 umfasst, wobei eine der zwei Ösen des Stift- und Ösenmontageelements (10) schwimmend ist.

## Revendications

1. Dispositif de fixation d'équipement amovible (3) d'aéronef pour aéronef comprenant une structure (4) à laquelle un équipement amovible (3) peut être fixé, le dispositif de fixation d'équipement amovible (3) d'aéronef comprenant :
- un premier accouplement (1) conçu pour être relié à la structure (4) d'aéronef,
- un second accouplement (2) conçu pour être relié à l'équipement amovible (3) et pour être accouplé au premier accouplement (1),
- un élément de fixation (5) conçu pour serrer à la fois l'équipement amovible (3) et le second accouplement (2) au premier accouplement (1) de sorte que l'équipement amovible (3) soit fixé à la structure (4) d'aéronef,
- une ferrure conçue pour relier le premier accouplement (1) à la structure (4) d'aéronef, la ferrure étant conçue pour limiter des degrés de liberté en translation et permettre des degrés de liberté en rotation, et
**caractérisé en ce que** le dispositif d'équipement amovible d'aéronef comprend
- un ressort relié au premier accouplement (1) et conçu pour être relié à la structure (4) d'aéronef, le ressort étant conçu pour maintenir le premier accouplement (1) dans une position d'installation nominale approximative.

2. Dispositif de fixation d'équipement amovible d'aéronef selon la revendication 1, le premier accouplement (1) et le second accouplement (2) présentant un axe longitudinal, et l'élément de fixation (5) étant conçu pour traverser une partie de l'équipement amovible (3) adjacente au second accouplement (2) et étant situé le long de l'axe longitudinal du premier accouplement (1) et du second accouplement (2).

3. Dispositif de fixation d'équipement amovible d'aéronef selon la revendication 2, l'élément de fixation (5) comprenant une tête (5.1) et une pointe (5.2) et, dans une position fixée, la pointe (5.2) étant conçue pour venir en prise avec le premier accouplement (1) et la tête (5.1) étant conçue pour reposer sur l'équipement amovible (3).

4. Dispositif de fixation d'équipement amovible d'aéronef selon la revendication 2 ou 3, l'élément de fixation (5) comprenant un corps allongé cylindrique comprenant une première partie filetée longitudinale (5.3) conçue pour être filetée sur le premier accouplement (1), une deuxième partie longitudinale (5.4) qui dans la position fixée est située dans le second accouplement (2) sur sa longueur longitudinale et une troisième partie longitudinale (5.5) située longitudinalement entre la première partie (5.1) et la deuxième partie (5.2).

5. Dispositif de fixation d'équipement amovible d'aéronef selon la revendication 4, l'élément de fixation (5) comprenant une fente circonférentielle (6) qui est située au niveau de sa troisième partie (5.5) et adjacente à la première partie (5.3) et un élément de retenue circonférentiel (7) conçu pour être situé au niveau de la fente circonférentielle (6), l'élément de retenue circonférentiel (7) présentant une dimension de rayon externe telle que les dimensions de l'élément de retenue circonférentiel (7) retiennent l'élément de fixation (5) à l'intérieur du second accouplement (2).

6. Dispositif de fixation d'équipement amovible d'aéronef selon la revendication 5, la longueur longitudinale de la première partie filetée (5.3) étant inférieure à la longueur longitudinale de la troisième partie (5.5).

7. Dispositif de fixation d'équipement amovible d'aéronef selon l'une quelconque des revendications précédentes, la ferrure entre le premier accouplement (1) et la structure d'aéronef étant une ferrure à goupille et oreille (10) comprenant un palier sphérique (8).

8. Dispositif de fixation d'équipement amovible d'aéronef selon l'une quelconque des revendications précédentes, le dispositif d'élément de fixation comprenant deux premiers accouplements (1), deux seconds accouplements (2) et deux éléments de fixation (5), les deux premiers accouplements (1) étant conçus pour être reliés à la structure (4) d'aéronef et les deux seconds accouplements (2) étant conçus pour être reliés à l'équipement amovible (3).

9. Ensemble équipement amovible (3) d'aéronef pour aéronef comprenant une structure (4) à laquelle peut être fixé un équipement amovible (3), l'ensemble équipement amovible (3) d'aéronef comprenant :
- un équipement amovible (3) et un dispositif de fixation d'équipement amovible selon l'une quelconque des revendications précédentes, le dispositif de fixation d'équipement amovible comprenant :
- le premier accouplement (1) conçu pour être relié à la structure (4) d'aéronef,
- le second accouplement (2) relié à l'équipement amovible (3) et conçu pour être accouplé au premier accouplement (1), et
- l'élément de fixation (5) conçu pour serrer l'équipement amovible (3) et le second accouplement (2) au premier accouplement (1) de sorte que l'équipement amovible (3) soit fixé à la structure (4) d'aéronef.

10. Ensemble équipement amovible (3) d'aéronef selon la revendication 9, l'équipement amovible (3) étant un entonnoir (30) d'un compartiment de groupe d'alimentation auxiliaire (APU).

11. Ensemble équipement amovible (3) d'aéronef selon la revendication 10, l'entonnoir (30) comprenant une porte d'entrée (31) et un actionneur (32) relié à l'entonnoir (30) et à la porte d'entrée (31).

12. Aéronef comprenant une structure (4) et un ensemble équipement amovible (3) d'aéronef fixé à la structure (4), l'ensemble équipement amovible d'aéronef étant selon l'une quelconque des revendications 9 à 11.

13. Aéronef selon la revendication 12, quand la revendication 9 comprend un dispositif de fixation d'équipement amovible selon la revendication 7, l'une des deux oreilles de la ferrure à goupille et oreille (10) étant flottante.
